# FASCICULE DE BREVET EUROPEEN

(11) **EP 0 533 873 B1**
(45) Date de publication et mention de la délivrance du brevet: **07.02.1996**
(21) Numéro de dépôt: 92907204.9
(22) Date de dépôt: 08.04.1992
(51) Int. Cl.: G01F 23/28, G01F 25/00

(54) **DETECTEUR A ULTRASONS ET PROCEDE DE DETECTION POUR MILIEUX LIQUIDES**
ULTRASCHALLDETEKTOR UND VERFAHREN ZUM NACHWEIS VON FLUESSIGEN MEDIEN
ULTRASONIC DETECTOR AND DETECTION METHOD FOR LIQUID MEDIA

(30) Priorité: 11.04.1991 CH 1078/91
(43) Date de publication de la demande: 31.03.1993
(73) Titulaire: MENUT, Jean-Baptiste, CH-1219 Châtelaine-Genève (CH)
(72) Inventeur: MENUT, Jean-Baptiste, CH-1219 Châtelaine-Genève (CH)
(74) Mandataire: Faltas Mikhail, William
(86) Numéro de dépôt international: CH9200065
(87) Numéro de publication internationale: WO9218835

(56) Documents cités:
- EP-A- 0 332 534
- WO-A-82/04122
- DE-B- 2 726 375
- US-A- 3 825 025
- US-A- 4 299 114

## Description

La présente invention a pour objet un détecteur à ultrasons pour milieux liquides, comportant un émetteur et un récepteur consistant en un transducteur sous forme d'une plaquette piézoelectrique montée sur un support délimitant un chemin acoustique linéaire pour la transmission d'ondes de détection à une haute fréquence de résonance axiale dans le liquide à détecter, ce détecteur étant agencé de manière à contrôler son fonctionnement par transmission d'ondes de contrôle à une basse fréquence de résonance radiale dans ledit support.

L'état de la technique relative aux détecteurs à ultrasons fonctionnant par transmission acoustique à travers le milieu liquide à détecter peut être illustré par les documents de brevet suivants: GB 2 177 510 A; DE 31 49 909 A1; US 4 958 518; US 4 787 240; US 4 535 628; US 4 432 231; US 4 063 457.

Les détecteurs à ultrasons décrits dans DE 31 49 909 A1, US 4 787 240 et US 4 063 457 comprennent notamment des éléments élastiques qui sont intercalés entre les transducteurs et leur support et constituent ainsi un isolant acoustique.

On peut par ailleurs mentionner un autre type de détecteur de liquide fonctionnant par propagation d'ultrasons à l'intérieur d'un corps de détection solide disposé au contact du liquide à détecter. Des détecteurs de ce type sont décrits par exemple dans FR 2 617 965 A1 ; FR 2 628 527 A1 et EP 0 372 700 A1.

Ces détecteurs connus nécessitent cependant une structure plus ou moins compliquée, n'assurent généralement pas le contrôle de leur fonctionnement et présentent des limitations importantes de leur champs d'applications.

Le brevet américain US 4 299 114 illustre l'état de la technique relative au contrôle du fonctionnement d'un détecteur à ultrasons pour milieux liquides, comportant un émetteur et un récepteur consistant en un transducteur sous forme d'une plaquette piézoelectrique montée sur un support délimitant un chemin acoustique linéaire pour la transmission d'ondes de détection à une haute fréquence de résonance axiale dans le liquide à détecter, ce détecteur étant agencé de manière à contrôler son fonctionnement par transmission d'ondes de contrôle à une basse fréquence de résonance radiale dans ledit support.

Ce brevet décrit un système de détection agencé sous forme d'une boucle de rétroaction électronique et ultrasonique qui relie le récepteur à l'émetteur par un circuit de réaction muni d'un amplificateur et d'un filtre passe-bande à deux bandes passantes servant respectivement à permettre la mise en résonance de l'émetteur avec le récepteur à une haute fréquence de résonance axiale pour la détection de liquide et à une basse fréquence de résonance radiale pour le contrôle du fonctionnement du détecteur par l'intermédiaire du support de l'émetteur et du récepteur.

Dans le système décrit dans ledit brevet américain, l'émetteur et le récepteur sont montés sur un support de manière à minimiser le couplage parasite dans ce support, leur isolation acoustique est réalisé en les montant sur des pieds en caoutchouc collés au support et une masse de remplissage les entoure et les maintient en place dans le support.

Un décollage éventuel desdits pieds en caoutchouc supportant l'émetteur couperait toutefois la transmission des ondes de détection à haute fréquence de résonance axiale et la détection de liquide deviendrait donc impossible. La transmission des ondes de contrôle à basse fréquence de résonance radiale dans le support par l'intermédiaire de ladite masse de remplissage serait cependant néanmoins maintenue, indiquant ainsi que le détecteur fonctionne correctement, bien qu'il ne soit plus capable de détecter la présence de liquide.

Ce montage de l'émetteur avec le récepteur dans ladite boucle de rétroaction ne permet donc pas d'assurer une détection de liquide vraiment fiable dans tous les cas, étant donné que les ondes de contrôle à basse fréquence peuvent continuer à indiquer le fonctionnement correct du détecteur même lorsque l'émetteur ne peut plus transmettre les ondes de détection à haute fréquence de résonance qui sont requises pour assurer la détection de liquide. La champ d'applications est ainsi réduit notablement par les limitations mentionnées quant à la fiabilité et la sensibilité de ce détecteur.

La présente invention a pour but de fournir un détecteur de liquides relativement simple qui offre une entière sécurité de fonctionnement et se prête à un champs d'applications étendu, notamment pour la commande de pompes, de vannes et/ou d'avertisseurs faisant partie de systèmes de réglage ou de sécurité.

A cette fin, l'invention a pour l'objet le détecteur à ultrasons qui présente la combinaison des caractéristiques définies dans la revendication 1 et qui assure notamment le contrôle automatique de l'état de marche du détecteur en l'absence ainsi qu'en présence du liquide à détecter.

L'émetteur d'ultrasons du détecteur selon l'invention est soumis à deux modes d'excitation différents par un générateur de fréquences afin d'assurer la détection en présence de liquide et le contrôle automatique de l'état de marche du détecteur.

Le générateur de fréquences est agencé de manière qu'il engendre d'une part la fréquence de résonance axiale permettant de produire des ondes ultrasonores transmises dans le liquide à détecter et d'autre part la fréquence de résonance radiale permettant de produire des ondes ultrasonores transmises dans le support commun.

Les deux fréquences d'excitation sont de préférence les fréquences de résonance fondamentales axiale et radiale de l'émetteur utilisé.

Le contrôle périodique de l'état de marche du détecteur est assuré par l'intermédiaire du support commun sur lequel l'émetteur et le récepteur sont montés de manière à assurer une bonne liaison mécanique et acoustique solide afin de constituer un guide d'ondes permettant d'assurer le contrôle permanent du fonctionnement de l'ensemble du détecteur.

L'excitation axiale de l'émetteur provoque par ailleurs un couplage parasite dans le support commun mais ne permet pas d'assurer un contrôle adéquat du détecteur.

L'expérience a démontré que l'excitation radiale, dans le plan de l'émetteur, permet d'obtenir toujours un signal de contrôle important correspondant à l'état de marche du détecteur aussi bien en l'absence qu'en présence du liquide à détecter.

Le détecteur selon l'invention permet ainsi d'assurer un contrôle permanent de son état de marche à l'aide des ondes ultrasonores transmises à travers le support commun qui est conçu spécialement pour assurer une bonne liaison acoustique permettant de déceler instantanément toute panne ou dérangement quel qu'en soit la cause.

Le signal de contrôle obtenu conformément à l'invention permet d'assurer avantageusement un réglage du seuil de détection de liquide.

A cette fin, le circuit de détection peut être muni d'un commutateur commandé par le signal de synchronisation provenant du générateur de fréquences et relié au potentiomètre de réglage du seuil de détection du comparateur, de manière que ce seuil soit réglé en fonction de l'amplitude du signal sortant du redresseur à filtre passe-bas et correspondant à la fréquence d'excitation radiale.

L'émetteur et le récepteur du détecteur selon l'invention sont formés de plaquettes piézoélectriques de toute forme appropriée, circulaire, carrée ou rectangulaire. Leurs dimensions seront choisis de manière connue notamment en fonction de la longueur du chemin acoustique à parcourir à travers le liquide.

Or, selon la nature du liquide à détecter et l'application envisagée, la longueur du chemin acoustique à travers le liquide peut être choisie plus ou moins librement de cas en cas dans une grande gamme allant de quelques millimètres à plusieurs dizaines de centimètres. La forme et les dimensions du support sont alors choisies selon la taille de l'émetteur et du récepteur, la longueur du chemin acoustique à travers le liquide et l'application envisagée.

On a obtenu de bons résultats avec des détecteurs comprenant des émetteurs et récepteurs piézoélectriques en forme de disques minces d'un diamètre de 6 à 16 mm et d'une épaisseur de 0,5 à 3 mm.

Une face principale de l'émetteur et du récepteur est avantageusement collée sur la surface d'appui correspondante, afin de la rendre complètement solidaire du support commun et de réaliser ainsi le couplage acoustique qui est indispensable pour assurer la fonction de contrôle par l'intermédiaire de ce support commun.

Les surfaces d'appui pour le montage de l'émetteur et du récepteur sur le support commun peuvent être avantageusement prévues sur des parois très minces, d'une épaisseur de 0,5 mm par exemple, qui constituent une partie intégrante du support commun et permettant d'améliorer les signaux de détection et de contrôle, notamment lorsque le liquide à détecter absorbe plus ou moins fortement les ondes ultrasonores. Ces parois présentant les surfaces d'appui séparent de préférence l'émetteur et le récepteur du liquide à détecter, de manière à les protéger de tout contact avec ce liquide.

Or, le montage de l'émetteur et du récepteur sur la paroi mince du support permet de supprimer pratiquement la propagation d'ondes par réflexion dans le support et d'affaiblir en conséquence ce couplage parasite.

Selon une forme d'exécution avantageuse de l'invention, le détecteur comprend des moyens transducteurs d'émission et de réception d'ondes ultrasonores qui sont constitués respectivement par des plaquettes piézoélectriques cintrées sous forme d'un segment de cylindre présentant une face active concave et sont montés symétriquement sur un tuyau présentant des segments de paroi cylindrique correspondants de faible épaisseur formant une partie intégrante dudit tuyau et présentent chacun une surface d'appui convexe adaptée à la face concave de la plaquette piézoelectrique.

Les centres de courbure de ces plaquettes piézoélectriques cintrées coïncident avec l'axe longitudinal dudit tuyau de manière que des ondes ultrasonores engendrées par l'excitation du transducteur émetteur cintré à une fréquence de résonance axiale puissent former un faisceau convergeant vers l'axe dudit tuyau et divergeant vers ledit transducteur récepteur et que des ondes ultrasonores engendrées par l'excitation du transducteur émetteur cintré à une fréquence de résonance radiale puissent être transmises par sa face active concave en contact direct avec la surface d'appui convexe du segment de paroi correspondant et propagées dans la paroi dudit tuyau.

Or, des essais effectués dans le cadre de la présente invention ont démontré que cette combinaison particulière du fonctionnement en mode de résonance axiale et en mode radiale permettait de réaliser diverses formes d'exécution avantageuses, adaptées respectivement à des applications différentes.

Il est cependant également possible en principe, comme on le verra plus loin, d'utiliser dans le cadre de l'invention un seul transducteur piézoelectrique agencé sur son support et associé aux moyens électroniques de traitement des signaux d'émission et de réception d'une manière lui permettant de fonctionner alternativement comme émetteur et récepteur.

Lorsque le transducteur électroacoustique est prévu pour fonctionner alternativement comme émetteur et comme récepteur, il sera associé à toute surface réflective appropriée de manière que les ondes ultrasonores transmises dans le liquide à détecter soient réfléchies vers ce transducteur fonctionnant ensuite comme récepteur.

L'invention en outre pour objet un procédé de détection de milieux liquides au moyen d'ondes ultrasonores engendrées par un transducteur sous forme d'une plaquette piézoélectrique montée sur un support solide délimitant un chemin acoustique linéaire dans le milieu liquide à détecter.

Ce procédé consiste essentiellement à fixer une face de ladite plaquette directement à une face d'appui dudit support de manière à réaliser une bonne liaison mécanique et acoustique permettant la transmission desdites ondes de détection et de contrôle, à relier ledit transducteur à un générateur de fréquences qui lui délivre lesdites fréquences de résonance axiale et radiale de manière à transmettre respectivement lesdites ondes de détection et de contrôle, à capter lesdites ondes de détection et de contrôle transmises respectivement dans le liquide à détecter et dans ledit support et à les comparer à au moins un seuil afin d'effectuer la détection de liquide et le contrôle du fonctionnement dudit transducteur. On peut avantageusement déterminer tout écart desdites ondes de contrôle par rapport à un premier seuil de contrôle prédéterminé et corriger un deuxième seuil de détection de liquide en fonction dudit écart.

L'invention sera expliquée plus en détail à l'aide de différentes formes d'exécution données à titre d'exemple et représentées sur le dessin annexé de la manière suivante.

Fig. 1 est une vue schématique d'un détecteur à ultrasons associé aux circuits d'excitation et de détection selon une forme d'exécution.

Fig. 1a montre le montage de l'émetteur et du récepteur sur le support commun du détecteur selon Fig. 1.

Fig. 2 montre une variante du circuit de détection du détecteur selon Fig. 1, comprenant des moyens de correction du seuil de détection.

Fig. 3 montre le détecteur selon Fig. 2 associé à un circuit auxiliaire relié à un circuit de commande d'une pompe.

Fig. 4 illustre le fonctionnement du détecteur selon Fig. 1 à 3.

Fig. 5 montre le détecteur selon Fig. 2 avec une variante du circuit auxiliaire relié au circuit de commande d'une pompe.

Fig. 6 montre une coupe d'un détecteur selon une autre forme d'exécution comprenant un support en forme de U.

Fig. 7 montre une coupe d'un détecteur selon une autre forme d'exécution comprenant un support en forme de bride.

Fig. 8 montre une autre variante des circuits d'excitation et de détection du détecteur selon Fig. 1.

Fig. 8a illustre le fonctionnement du détecteur selon Fig. 8.

Fig. 9 montre une variante du détecteur selon Fig. 8

Fig. 9a illustre le fonctionnement du détecteur selon Fig. 9.

Fig. 10 illustre le fonctionnement des circuits logiques selon Fig. 8.

Fig. 11a, 11b et 11c montrent des formes d'exécution des circuits logiques selon Fig. 8.

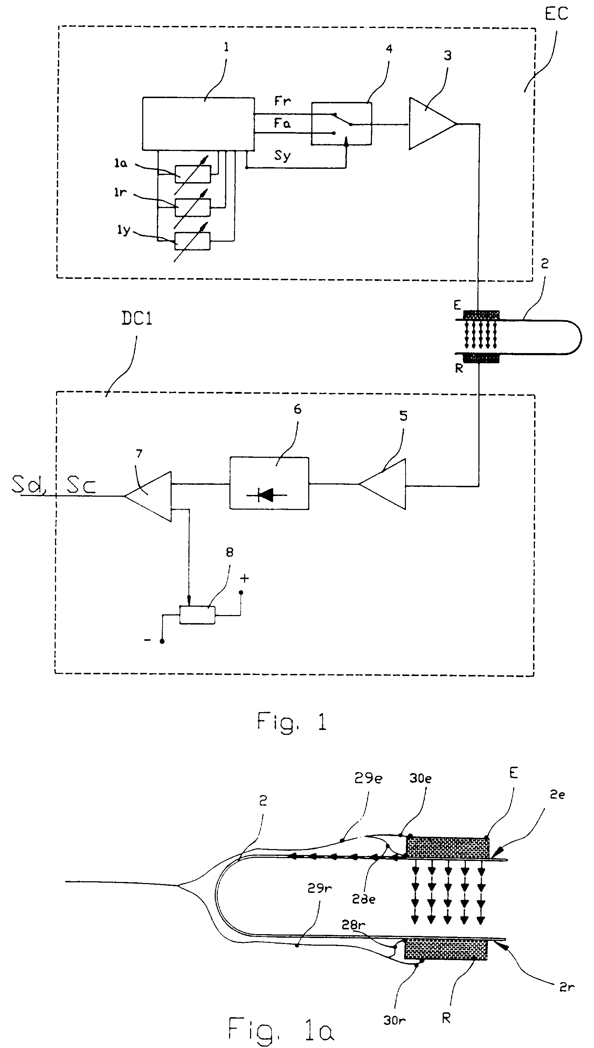

Le détecteur selon Fig. 1 comprend essentiellement un émetteur E et un récepteur R agencés en regard l'un de l'autre sur un support commun 2 en forme de U, séparés par un espace délimitant un chemin acoustique linéaire à travers le liquide à détecter, indiqué schématiquement par des flèches en Fig. 1

L'émetteur E et le récepteur R sont reliés respectivement au circuit d'excitation EC de l'émetteur E et au circuit de détection DC pour le traitement des signaux provenant du récepteur R.

L'émetteur E et le récepteur R sont constitués par des plaquettes piézoélectriques fixées respectivement sur ceux surfaces d'appui 2e, 2r (Fig. 1A) disposées aux extrémités libres des deux branches du support commun 2 qui est formé en l'occurrence d'une bande d'acier repliée en U constituant un bon conducteur acoustique.

Le support commun 2 est rigide et fixe ainsi la position exacte de l'émetteur E et du récepteur R et la longueur du chemin acoustique à travers le liquide à détecter. Il constitue en même temps un guide d'ondes, qui assure une bonne liaison mécanique et acoustique entre l'émetteur et le récepteur et permet ainsi la transmission d'ondes élastiques ultrasonores sur un chemin acoustique secondaire s'étendant dans le support commun 2 de l'émetteur E au récepteur R.

Les circuits d'excitation EC et de détection DC1 représentés en Fig. 1 comportent d'une part un générateur de fréquences 1 relié par un amplificateur 3 à l'émetteur E et d'autre part un redresseur à filtre passe-bas 6 relié au récepteur R par un amplificateur 5 et à un comparateur 7 muni d'une résistance variable 8 de réglage de seuil.

Le générateur de fréquences 1 du circuit d'excitation EC est muni en l'occurrence de trois résistances réglables 1a, 1r, 1y afin de lui permettre de fournir les trois signaux périodiques réglables suivants:

Un signal de synchronisation Sy correspondant à une fréquence de commutation, la fréquence d'excitation axiale Fa correspondant de préférence à la fréquence de résonance fondamentale axiale de l'émetteur E, perpendiculaire à ses faces principales (afin de produire les ondes ultrasonores transmises au récepteur R en présence du liquide à détecter) et un signal d'excitation radiale Fr qui correspond de préférence à la fréquence de résonance fondamentale radiale de l'émetteur E et sert à engendrer des ondes ultrasonores transmises au récepteur R dans le support commun 2.

Le circuit d'excitation EC est muni en outre d'un commutateur 4 associé au générateur de fréquences 1 et commandé par le signal de synchronisation Sy, de manière que les fréquences d'excitation axiale et radiale Fa et Fr soient acheminées alternativement à l'émetteur E par l'intermédiaire de l'amplificateur 3.

On a obtenu de bons résultats avec le détecteur selon l'invention dont l'émetteur est excité alternativement par exemple avec une fréquence axiale Fa de 700 kHz et une fréquence radiale Fr ce 250 kHz.

La période du signal de synchronisation Sy est choisie de manière qu'elle soit au moins 10 à 20 fois supérieure à la période d'excitation radiale.

Le circuit de détection DC1 délivre alternativement à la sortie du comparateur 7 un signal de détection Sd (en présence du liquide à détecter) et un signal de contrôle Sc (transmis à travers le support 2 en l'absence ainsi qu'en présence du liquide à détecter) correspondant à l'état de marche du détecteur.

Comme il ressort plus particulièrement de la Fig. 1a, une face principale de chacune des plaquettes E et R est fixée au moyen d'une colle conductrice sur la surface d'appui correspondante 2e et 2r à l'extrémité d'une branche du support commun 2. Or, on se limitera à décrire le montage de l'émetteur E, qui est exactement identique à celui du récepteur R.

La face principale intérieure de l'émetteur E est collée en l'occurrence sur la surface d'appui extérieure 2e du support 2 et reliée électriquement à l'électrode correspondante de l'émetteur au moyen d'une couche de colle conductrice reliée au blindage 28e d'un fil coaxial blindé 29e. La face principale extérieure de la plaquette E est revêtue d'une couche conductrice reliée à un fil électrique central 30e du fil blindé 29e.

Le récepteur R est agencé, monté et relié par l'intermédiaire du fil blindé 29r de façon identique sur la face d'appui 2r.

L'ensemble de l'émetteur E et du récepteur R, leur support commun 2 et les connexions électriques sera entouré par un enrobage rigide, non représenté en Fig. 1, par exemple en plastique, servant à encapsuler, protéger et renforcer le support 2 avec l'émetteur E, le récepteur R et leurs connexions.

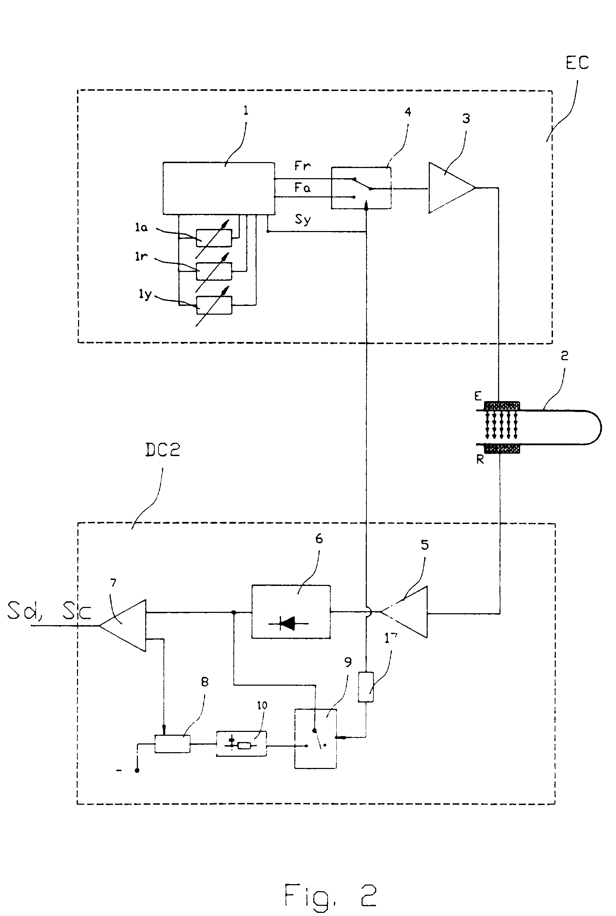

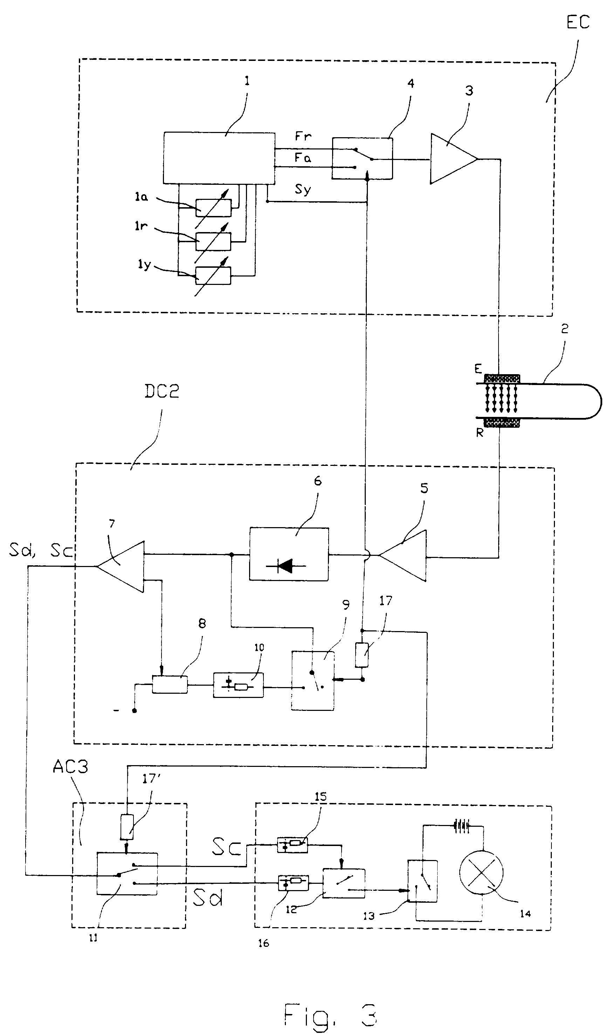

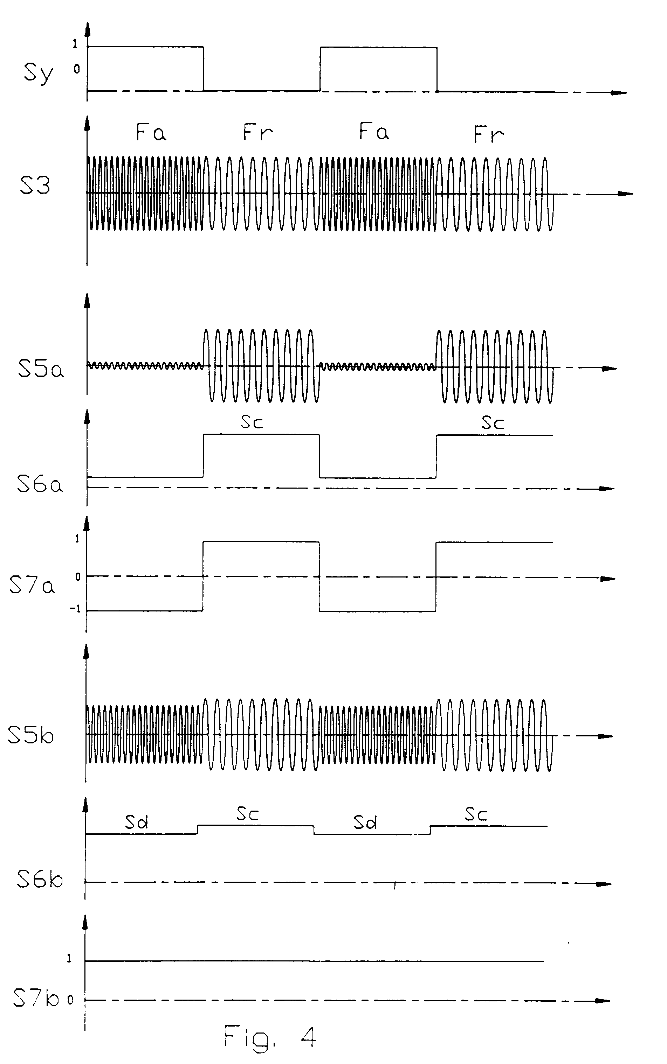

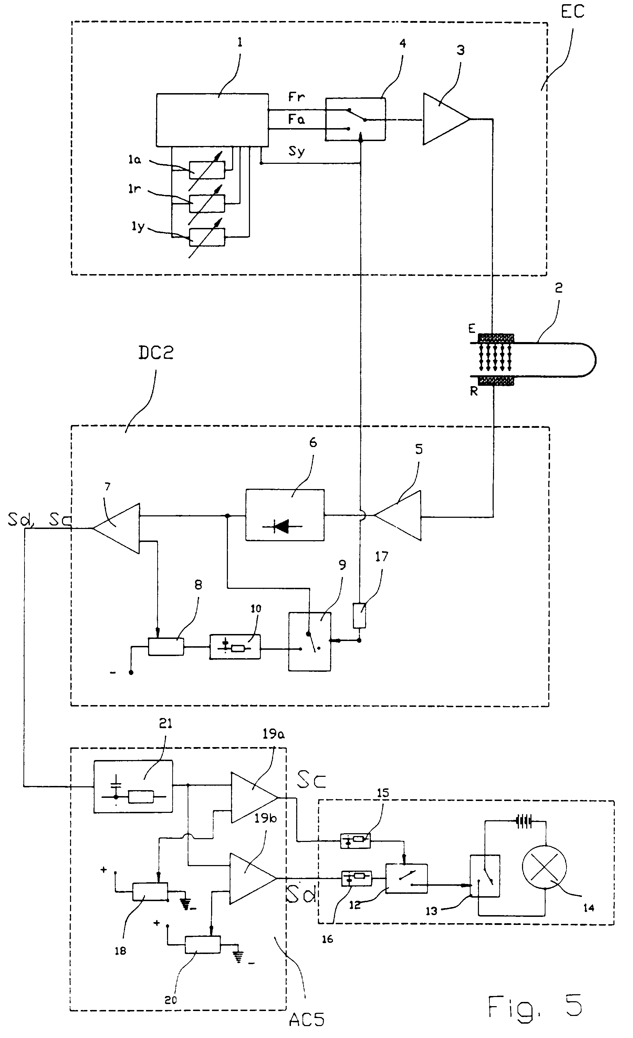

Fig. 2 montre une variante qui correspond au détecteur décrit selon Fig. 1, sauf que le circuit de détection DC2 selon Fig. 2 comprend des moyens de correction automatique du seuil de détection.

A cette fin, le circuit de détection DC2 représenté en Fig. 2 est muni d'un commutateur 9 relié à la sortie du redresseur avec filtre passe-bas 6 et, par l'intermédiaire d'un autre filtre passe-bas 10, au potentiomètre 8 de réglage du seuil de détection du comparateur 7.

Comme il ressort en outre de la Fig. 2, ce commutateur 9 est commandé par le signal de synchronisation Sy (provenant du générateur de fréquences 1), de manière que le signal de réponse transmis à travers le support 2 lors de l'excitation radiale de l'émetteur E soit acheminé au potentiomètre 8 et qu'il ajuste ainsi continuellement le seuil de détection du comparateur 7 en fonction de l'amplitude de ce signal. Afin que le cornmutateur 9 laisse passer vers le filtre passe-bas 10 ledit signal transmis à travers le support 2 lors de l'excitation radiale. Ce commutateur 9 est commandé par le signal de synchronisation Sy avec un retard fourni par un temporisateur 17 correspondant au temps de propagation dans le support 2.

Ainsi, lorsque les signaux de réponse s'affaiblissent pour une raison quelconque, le seuil de détection du comparateur 6 sera baissé en conséquence afin d'assurer une détection satisfaisante.

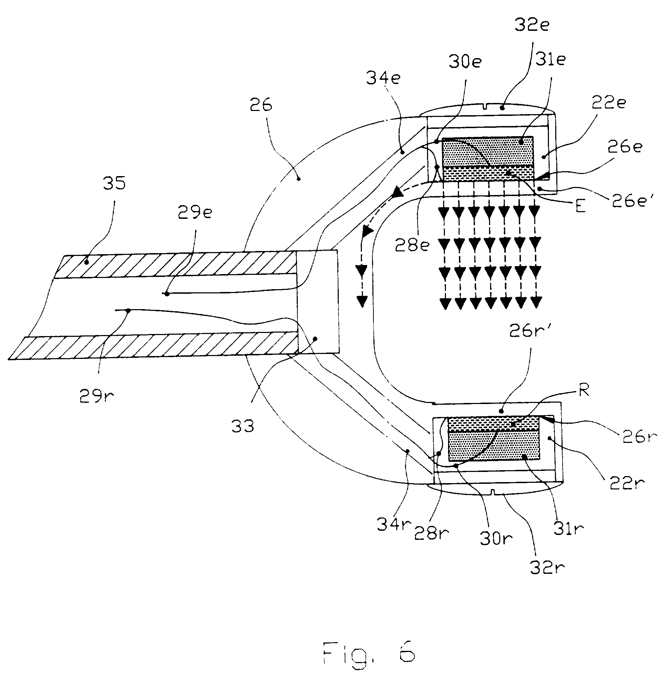

La Fig. 3 montre un détecteur qui correspond à la Fig. 2 et est muni en l'occurrence d'un circuit auxiliaire AC3 comprenant un commutateur 11 qui présente une entrée reliée à la sortie du comparateur 7 et deux sorties associées respectivement à deux filtres passe-bas 15 et 16, est commandé par le signal de synchronisation Sy provenant du générateur de fréquences 1 par l'intermédiaire d'un temporisateur 17' et est agencé de manière qu'il délivre respectivement le signal de contrôle Sc à la sortie associée au filtre passe-bas 15 et le signal de détection Sd à la sortie associée au filtre passe-bas 16.

Fig. 3 montre en outre à titre d'exemple une pompe 14 dont le circuit d'alimentation électrique est commandé par l'intermédiaire de deux commutateurs 12 et 13 représentés dans leur position de repos ouverte.

Lorsque le détecteur fonctionne normalement, le comparateur 7 délivre le signal de contrôle Sc qui ferme le commutateur 12 et le signal de détection Sd passe au commutateur 13, lequel se terme en présence du signal de détection de liquide Sd pour faire fonctionner la pompe 14.

L'absence du signal de contrôle Sc provoquera cependant toujours l'arrêt de la pompe en cas de dérangement du détecteur.

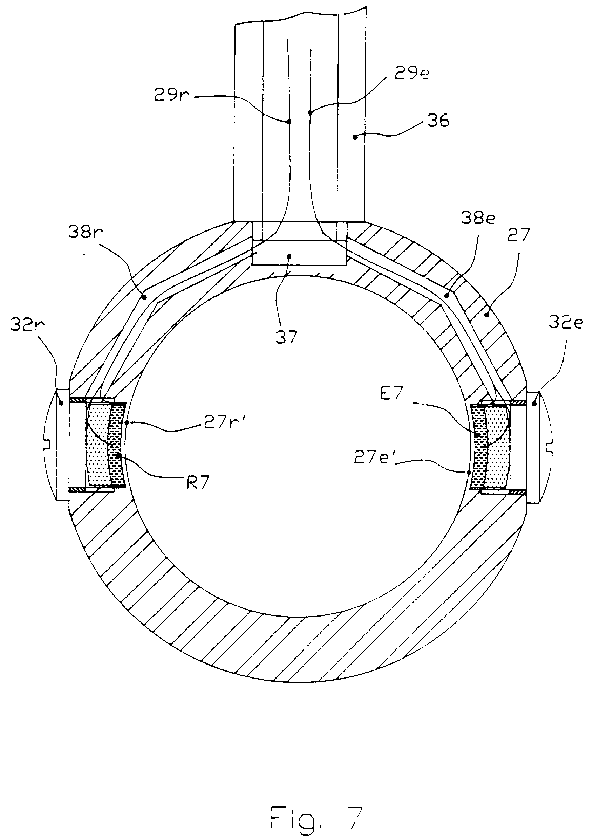

Le fonctionnement du détecteur selon Fig. 1 à 3 est illustré en Fig. 4 qui représente respectivement les signaux suivants:

Le signal de synchronisation Sy et le signal correspondant aux fréquences d'excitation axiale Fa et radiale Fr, les oscillations transitoires n'étant pas représentées, tandis que leur importance relative est limitée du fait que la fréquence du signal Sy est choisie de manière qu'elle soit au moins 10 à 20 fois inférieure à la fréquence d'excitation radiale Fr.

Les signaux de réponse S5a, S6a et S7a délivrés respectivement en l'absence du liquide à détecter par l'amplificateur 5, le redresseur 6 et le comparateur 7 du circuit de détection.

Les signaux de réponse S5b, S6b et S7b délivrés respectivement en présence du liquide à détecter par l'amplificateur 5, le redresseur 6 et le comparateur 7 du circuit de détection.

Cependant, il convient de noter que le décalage dans le temps des signaux de réponse par rapport aux signaux d'émission, résultant du temps de vol entre l'émetteur et le récepteur, n'est pas représenté en Fig. 4 afin de simplifier le dessin.

Comme il ressort de la Fig. 4, le signal de synchronisation Sy correspond à la valeur 1 et 0 respectivement pendant les phases d'excitation axiale à la fréquence Fa et radiale à la fréquence Fr.

Fig. 4 montre en outre que le signal S5a, S6a de réponse en l'absence de liquide présente d'une part lors de la phase d'excitation axiale (fréquence Fa) une faible amplitude correspondant au couplage parasite à travers le support commun 2.

Le signal S7a qui est délivré par le comparateur 7 en l'absence du liquide à détecter lors de la phase d'excitation axiale (fréquence Fa) présente la valeur -1 (voir Fig. 4).

Il ressort en outre de la Fig. 4 que le signal S5a, S6a de réponse en l'absence de liquide présente une amplitude importante lors de la phase d'excitation radiale (fréquence Fr), tandis que le signal S7a correspondant délivré par le comparateur 7 lors de cette phase présente la valeur +1.

Le signal S7a sortant de l'amplificateur 7 en l'absence de liquide comprend ainsi un signal de contrôle périodique Sc, qui tombe immédiatement à -1 en cas de panne du détecteur.

La partie inférieure de la Fig. 4 représente en outre les signaux S5b, S6b et S7b de réponse qui sont délivrés respectivement en présence du liquide à détecter par l'amplificateur 5, le redresseur 6 et le comparateur 7 du circuit de détection.

Le signal S5b délivré par l'amplificateur 5 en présence de liquide lors des phase d'excitation axiale (fréquence Fa) et radiale (Fr) présente une amplitude importante lors de ces deux phases et le comparateur délivre dans ce cas un signal S7b qui reste constant à la valeur 1 aussi longtemps que le liquide est détecté.

En revanche, si le fonctionnement du détecteur est dérangé pour une raison quelconque, le signal S7a tombe instantanément à -1 (indépendamment de la présence ou l'absence du liquide à détecter).

Fig. 5 montre un détecteur qui correspond au détecteur selon Fig. 3 et est muni en l'occurrence d'un circuit auxiliaire AC5 comprenant un redresseur avec filtre passe-bas 21 dont la sortie est branchée en parallèle à deux autres comparateurs 19a et 19b avec des potentiomètres de réglage de seuil 18 et 20 respectivement.

Les seuils de détection de ces deux comparateurs sont ajustés à des valeurs différentes de manière que le comparateur 19b délivre le signal de détection Sd à la sortie associée au filtre-passe bas 16 et le comparateur 19a délivre le signal de contrôle Sc à l'autre sortie associée au filtre passe-bas 15.

Comme il ressort en outre de la Fig. 5, ce circuit auxiliaire AC5 est également associé à la commande d'une pompe 14 de la manière déjà décrite par rapport à la Fig. 3.

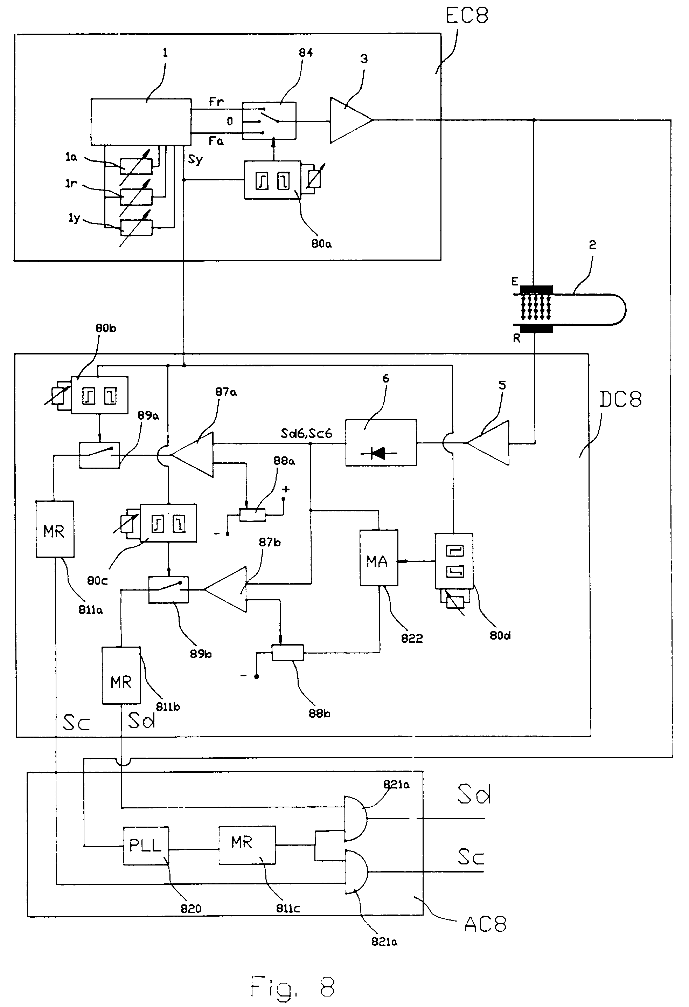

Le détecteur représenté en Fig. 6 comprend l'émetteur E et le récepteur R montés en regard l'un de l'autre dans un support commun 26 constitué par un profilé qui est replié en forme de U et présente deux trous borgnes diamétralement opposés 22e, 22r ménagés dans les branches parallèles du support.

Ces trous borgnes 22e, 22r sont percés depuis l'extérieur en laissant deux parois planes 26e', 26r' de faible épaisseur faisant partie du support 26 tandis que leur fonds présentent respectivement des surfaces d'appui planes 26e, 26r servant au montage fixe de l'émetteur E du récepteur R.

Les deux parois planes 26e', 26r' présentent une très faible épaisseur inférieure à 1 mm, en l'occurrence de 0,4 mm.

Cette épaisseur est avantageusement inférieure à un dixième de la longueur d'onde des ondes ultrasonores propagées dans le matériau solide du support 26, et cela afin de rendre cette paroi mince 26e' et 26r' transparente aux ondes ultrasonores émises axialement.

On se limitera ici à la description du montage de l'émetteur E, étant donné que le montage du récepteur R est le même.

L'émetteur E est logé dans le trou borgne correspondant 22e en laissant un jeu latéral afin d'éviter tout contact latéral et couplage parasite avec la paroi délimitant ce trou 22e. La face principale intérieure de l'émetteur E est collée au moyen d'une couche de colle conductrice sur la face d'appui correspondante 26e au fond de ce trou 22e et reliée au blindage 28e d'un fil coaxial blindé 29e.

La face extérieure de l'émetteur E est revêtue d'une couche de colle conductrice reliée au fil central 30e du fil blindé 29e.

Un coussin amortisseur 31e est en outre collé à la face arrière de l'émetteur E et le trou 22e est enfin obturé par un bouchon 32e servant à renfermer de façon étanche l'émetteur E et ses connexions électriques.

Le récepteur R est monté et relié électriquement de façon identique dans le trou borgne 22r par l'intermédiaire du fil blindé 29r.

Comme on le voit de la Fig. 6, le support 26 en forme de U est muni d'un trou central 33 relié aux trous borgnes 22e, 22r par deux percements 34e, 34r contenant les fils coaxiaux 29e et 29r.

Ce trou central 33 sert à la fixation du support commun 26 renfermant l'émetteur E et le récepteur R sur un tube de raccordement 35 contenant les connexions électriques et servant à la liaison aux circuits d'excitation et de détections (non représentés en Fig. 6), ces circuits pouvant être agencés de la manière décrite par rapport à l'une des figures précédentes.

La forme d'exécution représentée en Fig. 7 comporte un support annulaire 27 sous forme d'un tuyau et le montage de l'émetteur E7 et du récepteur R7 correspond à celui selon Fig. 6, les éléments similaires déjà décrits étant désignés par les mêmes références dans les Fig. 6 et 7.

Comme il ressort de la Fig. 7, les parois minces 27e' et 27r' présentant les surfaces d'appui respectives sont cintrées sur la périphérie du support annulaire 27, l'émetteur E7 ainsi que le récepteur R7 étant cintrés en conséquence afin que leurs faces principales épousent les surfaces d'appui correspondantes.

Un tube de raccordement 36 est par ailleurs monté latéralement dans le trou central 37 sur la branche du support annulaire 27 qui renferme les fils coaxiaux 29e et 29r respectivement dans les percements 38e et 38r, afin de conduire ces fils électriques vers l'extérieur et de les relier aux circuits d'excitation et de détection non représentés, ces circuits pouvant également être agencés de la manière décrite selon l'une des figures précédentes.

Ce détecteur de forme annulaire selon Fig. 7 peut être utilisé de différentes manières. Il peut être monté horizontalement par exemple sur un tuyau vertical présentant le même diamètre intérieur que le support annulaire 27, afin de détecter la présence ou l'absence de liquide au niveau de l'émetteur E et du récepteur R.

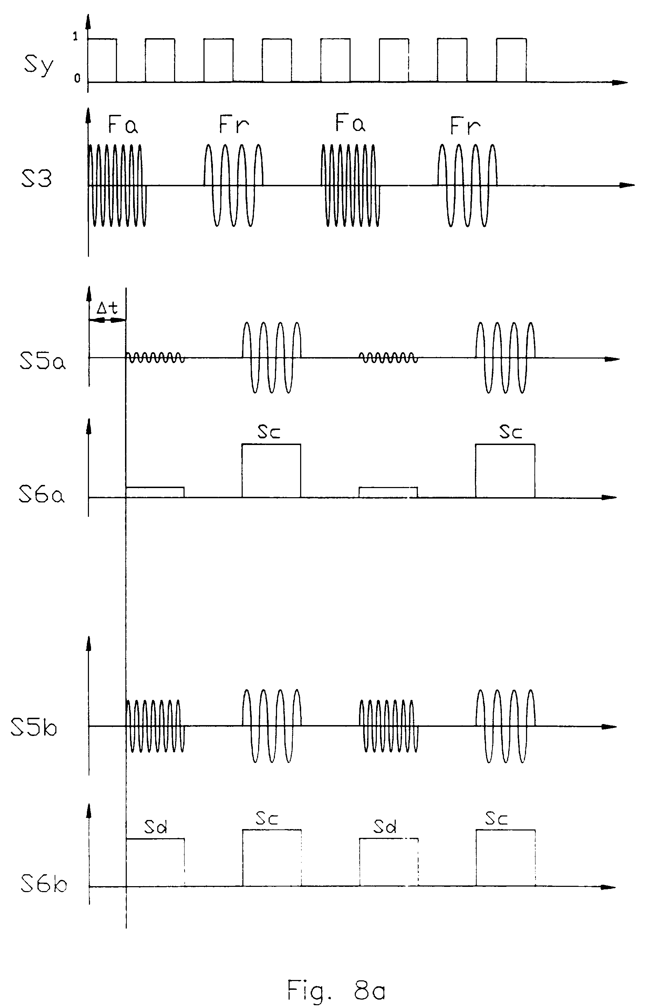

La variante selon Fig. 8 comprend des circuits d'excitation EC8 et de détection DC8 modifiés, qui comportent les mêmes éléments 1, 1a, 1r, 1y, 2, 3, 5 et 6 que ceux déjà décrits par rapport à la Fig 1.

Le circuit d'excitation EC8 comprend un commutateur 84 à trois positions, dont une position de repos, commandé par un circuit logique 80a en fonction du signal de synchronisation Sy.

Le circuit de détection DC8 comprend deux comparateurs 87a et 87b qui sont à seuils réglables par les résistances variables 88a et 88b et sont reliés respectivement par l'intermédiaire des commutateurs 89a et 89b à des circuits monostable réarmables 811a et 811b qui délivrent respectivement les signaux Sc et Sd. Les commutateurs 89a et 89b sont commandés en fonction du signal de synchronisation Sy provenant du générateur de fréquence respectivement par l'intermédiaire de circuits logiques 80b et 80c.

La sortie du redresser 6 est reliée à l'entrée des comparateurs 87a et 87b et à l'entrée d'une mémoire analogique 822 qui est commandée par le circuit logique 80d en fonction du signal de synchronisation Sy et présente une sortie reliée à la résistance 88b afin de régler le seuil du comparateur 87b.

La figure 8 montre en outre un circuit auxiliaire AC8 de validation des signaux Sd et SC. Le signal à la sortie de l'amplificateur 3 est dirigé à l'entrée d'un circuit de discrimination de fréquence 820 (PLL, phase lock loop).

Ce circuit 820 est réglé de manière qu'il délivre un signal 1 à sa sortie si le signal d'entrée correspond à la fréquence d'excitation axiale, et un signal 0 dans le cas contraire.

La largeur de bande pour laquelle ce circuit 820 délivre un signal 1 est réglée en fonction des transducteurs piézoélectriques E et R et du niveau de signal admissible lorsque la fréquence dérive.

La sortie du circuit de discrimination 820 délivre donc, lorsque le circuit fonctionne normalement, de façon intermittente un signal 1 vers le circuit monostable réarmable 811c qui dans ce cas délivre un signal 1 constant. Ce signal est acheminé vers deux portes logique "et" 821a et 821b. Ces deux portes valident les signaux Sd et Sc émis par le circuit DC8.

Le signal Sd6, Sc6 à la sortie du redresseur 6 est acheminé vers les deux comparateurs 87a et 87b à seuils réglables par les résistances variables 88a et 88b.

Le comparateur 87a délivre un signal 1 ou 0 selon que le seuil de contrôle est atteint ou non. Le commutateur 89a piloté par le circuit logique 80b achemine en fonction du temps le signal de sortie du comparateur 87a vers le circuit monostable réarmable 811a. Il n'est pris en compte que le signal correspondant au temps de réception de l'onde radiale.

Le circuit monostable réarmable 811a ainsi excité délivre un signal continu de contrôle Sc tant que le signal issu du commutateur 89a passe à 1 et se répète à une fréquence suffisamment élevée en correspondance avec la constante de temps du circuit monostable réarmable 811a.

Le comparateur 87b fonctionne de la même manière pour le signal Sd6 correspondant au signal de détection. Le circuit logique 80c permet au commutateur 89b d'acheminer le signal reçu pour les intervalles de temps correspondant au temps de réception de l'onde axiale vers le circuit monostable réarmable 811b qui fonctionne comme le circuit monostable réarmable 811a.

La mémoire analogique 822 reçoit le signal Sc6 de sortie du redresseur 6 et, au moment correspondant à la réception de l'onde radiale, moment indiqué par le circuit logique 80d, garde en mémoire cette valeur qui alimente d'un côté la résistance de réglage de seuil 88b. Ainsi le seuil du comparateur 87b est ajusté automatiquement en fonction de l'efficacité des transducteurs E et R.

La figure 8a illustre le fonctionnement des circuits selon Fig. 8, les signaux S3, S5a, S5b, S6a, S6b correspondant respectivement aux signaux portant les mêmes références et déjà décrits par rapport à la Fig. 4. Cette figure montre le décalage dans le temps de la réception par rapport à l'émission dû au temps de vol de l'onde.

La valeur issue de la mémoire analogique 822 peut par ailleurs être utilisée aussi comme indicateur d'efficacité des éléments d'émission et de réception et être pris en compte dans la validation des signaux.

Fig. 11a, 11b et 11c représentent respectivement, à titre d'exemple, des formes d'exécution des circuits logiques: 80a; 80b, 80d; 80c selon Fig. 8.

Le circuit logique représenté en Fig. 11a comprend deux bascules JK1 et JK2 (de type JK) montés en série et trois portes P1, P2 et P3.

La bascule JK1 reçoit le signal de synchronisation Sy et bascule sur le flanc montant de ce signal. La bascule JK2 bascule sur le flanc montant de JK1.

La porte P1 délivre le signal P1ₐ correspondant au temps d'excitation axiale, la porte P2 délivre le signal P2ᵣ correspondant au temps d'excitation radiale et la porte P3 délivre le signal P3ₒ correspondant au temps de repos.

Fig. 11b et 11c représentent des formes d'exécution simplifiées par rapport aux circuits selon Fig. 11a.

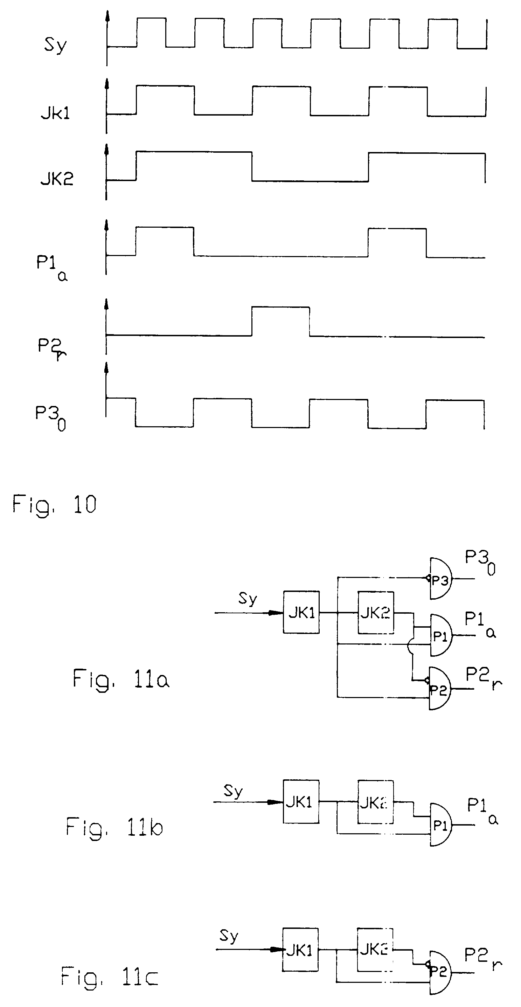

Fig. 10 illustre le fonctionnement de ces circuits logiques et représente le déroulement des signaux correspondants JK1, JK2, P1ₐ, P2ᵣ et P3ₒ en fonction du signal de synchronisation Sy.

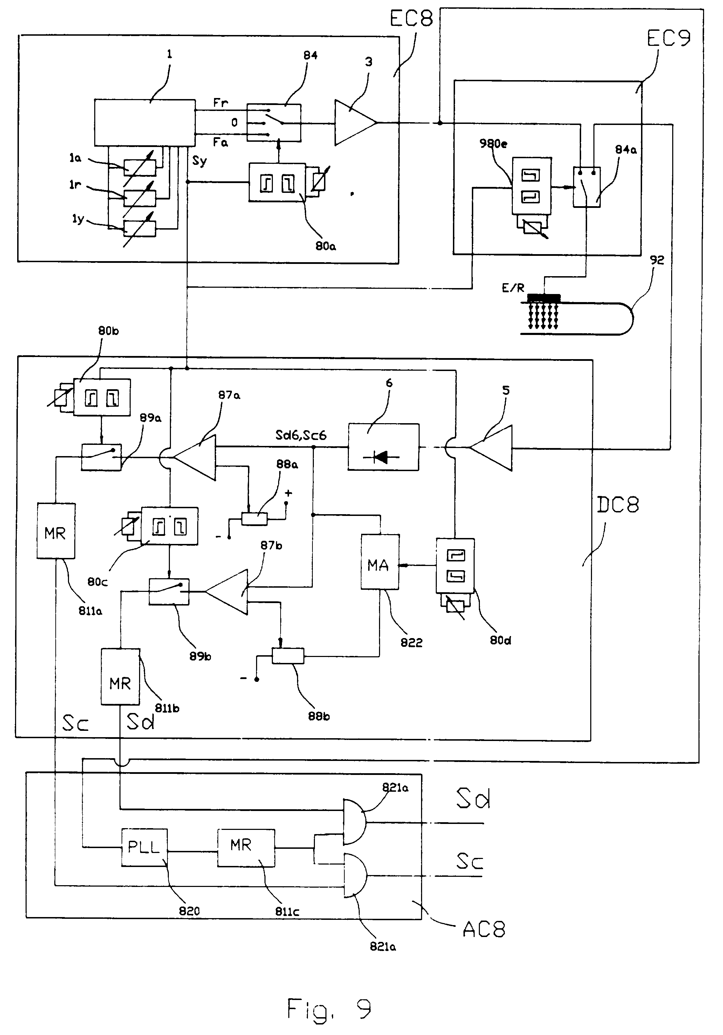

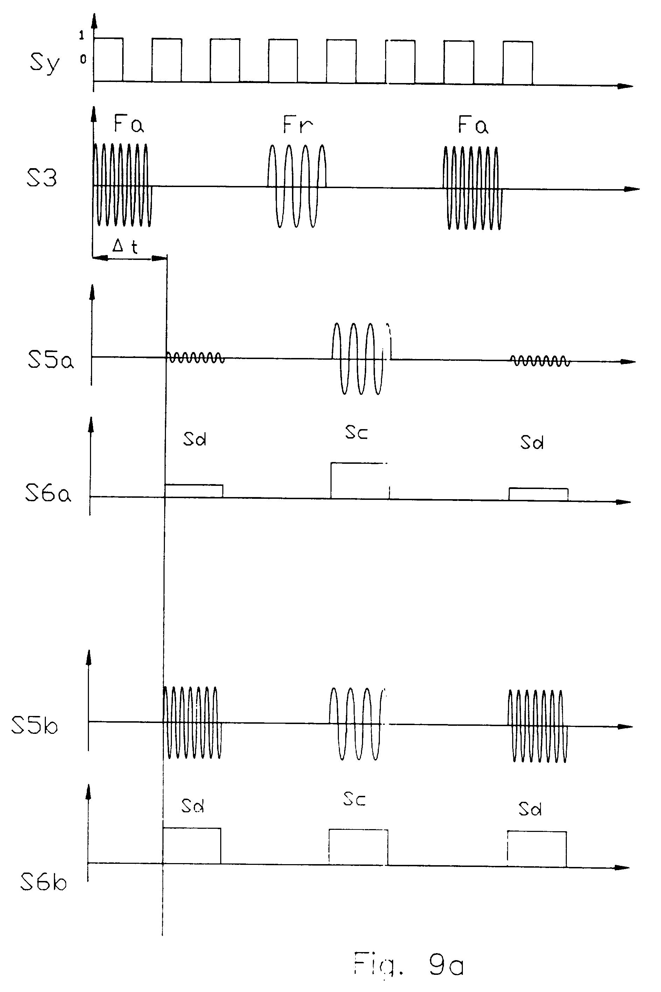

Fig. 9 montre une variante du détecteur selon figure 8 dans laquelle un support 92 est muni d'un seul élément piézoélectrique E/R qui fonctionne alternativement en émetteur et récepteur.

Dans un premier temps, ledit élément piézoélectrique E/R est relié par le commutateur 84a au circuit d'excitation EC8 de sorte qu'il fonctionne comme émetteur. A la fin de l'émission d'un train d'ondes, le commutateur 84a bascule et relie ledit élément piézoélectrique E/R au circuit de détection DC8 de sorte qu'il fonctionne alors comme récepteur.

La figure 9a illustre le fonctionnement des circuits selon Fig. 9, les signaux S3, S5a, S5b, S6a, S6b correspondant respectivement aux signaux portant les mêmes références et déjà décrits par rapport à la Fig. 4. Cette figure montre en outre le décalage dans le temps de la réception par rapport à l'émission dû au temps de vol aller et retour de l'onde.

Il faut tenir compte du temps de vol aller et retour pour déterminer la longueur des trains d'onde d'émission tant axiale que radiale qui doivent être plus brefs que le dit temps de vol. De même, le temps de repos entre deux émissions axiale et radiale doit être plus long que la somme du temps d'émission et du temps de vol aller et retour afin d'éviter toute superposition de signaux.

Le détecteur selon l'invention présente divers avantages pratiques qui permettent son emploi dans divers champs d'applications.

Grâce au contrôle automatique de son état de marche, ce détecteur présente une très grande fiabilité, telle que requise pour la majorité des applications industrielles dans les systèmes de réglage et de sécurité.

Le correction de son seuil de détection lui permet de s'adapter à des conditions de fonctionnement variables.

Il se prête ainsi à la détection de liquides très divers, même des liquides très visqueux et corrosifs, qui peuvent se trouver à une température comprise entre -20°C et 150°C.

Ce détecteur peut servir également à détecter l'apparition de bulles ou de corps poreux dans un liquide.

## Revendications

1. Détecteur à ultrasons pour milieux liquides, comportant un émetteur (E) et un récepteur (R) consistant en un transducteur sous forme d'une plaquette piézoélectrique montée sur un support (2) délimitant un chemin acoustique linéaire pour la transmission d'ondes de détection à une haute fréquence de résonance axiale dans le liquide à détecter, ce détecteur étant agencé de manière à contrôler son fonctionnement par transmission d'ondes de contrôle à une basse fréquence de résonance radiale dans ledit support (2), caractérisé en ce que:
(a) une face principale de ladite plaquette piézoélectrique formant l'émetteur (E) et le récepteur (R) est fixée directement à une surface d'appui correspondante (2e, 2r) dudit support (2), de manière qu'une liaison mécanique et acoustique solide soit formée afin d'établir un couplage acoustique pour assurer la transmission desdites ondes de détection et de contrôle par ladite face principale et que ce support (2) forme ainsi un guide d'onde acoustique pour la transmission directe desdites ondes de contrôle sur un chemin acoustique secondaire entre l'émetteur (E) et le récepteur (R),
(b) l'émetteur (E) est relié à un circuit d'excitation (EC; EC2; EC8) muni d'un générateur de fréquences (1) qui est agencé de manière qu'il délivre deux fréquences d'excitation (Fa, Fr) permettant de soumettre l'émetteur (E) à ladite haute fréquence de résonance axiale (Fa) pour la transmission desdites ondes de détection à haute fréquence sur ledit chemin acoustique linéaire dans le liquide à détecter et de soumettre l'émetteur en outre à ladite basse fréquence de résonance radiale (Fr) pour la transmission desdites ondes de contrôle à basse fréquence sur ledit chemin acoustique secondaire dans ledit support (2) et
(c) ledit récepteur (R) est relié à un circuit de détection (DC1, DC2; DC8) qui est muni d'au moins un comparateur (7; 87a, 87b) et est agencé de manière à délivrer un signal de détection (Sd) lorsque lesdites ondes de détection sont transmises sur ledit chemin acoustique linéaire dans le liquide à détecter et à délivrer en outre un signal de contrôle (Sc) lorsque lesdites ondes de contrôle sont transmises sur ledit chemin acoustique secondaire dans. ledit support (2) afin de contrôler ainsi le fonctionnement du détecteur.

2. Détecteur selon la revendication 1, caractérisé en ce que ledit circuit d'excitation (EC; EC2; EC8) est agencé de manière à délivrer lesdites deux fréquences d'excitation successivement et cycliquement audit émetteur (E) et que ledit circuit de détection (DC1; DC2; DC8) délivre également lesdits signaux de détection (Sd) et de contrôle (Sc) successivement et cycliquement.

3. Détecteur selon la revendication 2, caractérisé en ce que ledit générateur de fréquences i1 ) est relié à l'émetteur (E) par l'intermédiaire d'un commutateur (4; 84) et est agencé de manière à délivrer en outre un signal de synchronisation (Sy), ledit commutateur étant commandé par ce signal de synchronisation de manière à délivrer lesdites deux fréquences d'excitation (Fa, Fr) alternativement audit émetteur (E).

4. Détecteur selon la revendication 3, caractérisé par le fait que ledit circuit d'excitation (EC8, Fig. 8) comprend un commutateur (84) à trois positions commandé par l'intermédiaire d'un circuit logique (80a) qui reçoit ledit signal de synchronisation (Sy) dudit générateur de fréquences (1) et est agencé pour commander ledit commutateur (84) de manière que lesdites fréquences de résonance axiale (Fa) et radiale (Fr) soient délivrées alternativement audit émetteur (E) et séparées par des intervalles de repos intermédiaires.

5. Détecteur selon la revendication 4, caractérisé par le faitr que le circuit de détection (DC2) comprend un comparateur (7) à seuil réglable qui est relié audit récepteur (R) par l'intermédiaire d'un amplificateur (5) et d'un redresseur (6) à filtre passe-bas et est muni d'une résistance variable (8) de réglage du seuil de ce comparateur (7) en fonction de l'amplitude d'un signal (Sc6) sortant dudit redresseur (6) et correspondant à ladite fréquence d'excitation radiale (Fr).

6. Détecteur selon la revendication 4, caractérisé par le fait que ledit circuit de détection (DC8, Fig. 8; Fig. 9) comprend un premier comparateur (87a) ayant un premier seuil réglable associé au dit signal de contrôle (Sc) et une première résistance (88a) de réglage dudit premier seuil et qu'il comprend en outre un second comparateur (87b) ayant un second seuil réglable associé au dit signal de détection (Sd) et une deuxième résistance (88a) de réglage dudit second seuil, lesdits comparateurs étant reliés audit récepteur (R) par l'intermédiaire d'un amplificateur (5) et d'un redresseur (6) à filtre passe-bas et ledit second seuil associé au dit signal de détection (Sd) étant réglable en fonction d'un signal (Sc6) sortant dudit redresseur (6) à filtre passe-bas et correspondant à ladite fréquence de résonance radiale (Fr).

7. Procédé de détection de milieux liquides au moyen d'ondes ultrasonores engendrées par un transducteur sous forme d'une plaquette piézoélectrique montée sur un support solide délimitant un chemin acoustique linéaire dans le milieu liquide à détecter, selon lequel on engendre des ondes de détection à haute fréquence de résonance axiale et des ondes de contrôle à une basse fréquence de résonance radiale, caractérisé par le fait:
(a) que l'on fixe une face principale de ladite plaquette piézoélectrique directement à une face d'appui correspondante dudit support de manière à réaliser une bonne liaison mécanique et acoustique permettant la transmission desdites ondes de détection perpendiculairement à ladite face principale et desdites ondes de contrôle dans le plan de cette face principale de ladite plaquette,
(b) que l'on relie ledit transducteur à un générateur de fréquences qui lui délivre lesdites fréquences de résonance axiale et radiale de manière à transmettre respectivement lesdites ondes de détection et de contrôle,
(c) que l'on capte lesdites ondes de détection et de contrôle transmises respectivement dans le liquide à détecter et dans ledit support et on les compare à au moins un seuil afin d'effectuer la détection de liquide et le contrôle du fonctionnement dudit transducteur.

8. Procédé selon la revendication 7, caractérisé en ce que l'on détermine tout écart desdites ondes de contrôle par rapport à un premier seuil de contrôle prédéterminé et que l'on corrige un deuxième seuil de détection de liquide en fonction dudit écart.

## Patentansprüche

1. Ultraschalldetektor für flüssige Medien, mit einem Sender (E) und einem Empfänger (R) bestehend aus einem Wandler in Form eines piezoelektrischen Plättchens montiert auf einem Träger (2), der einen linearen akustischen Weg begrenzt, zum Übertragen von Nachweiswellen mit hoher Axialresonanzfrequenz in der nachzuweisenden Flüssigkeit, wobei dieser Detektor für seine Funktionskontrolle durch Übertragung von Kontrollwellen mit niedriger Radialresonanzfrequenz im genannten Träger (2) ausgelegt ist, dadurch gekennzeichnet:
(a) dass eine Hauptfläche des genannten, den Sender (E) und den Empfänger (R) bildenden, piezoelektrischen Plättchens unmittelbar auf einer entsprechenden Auflagefläche (2e, 2r) des genannten Trägers (2) befestigt ist, so dass eine feste mechanische und akustische Verbindung gebildet wird, um eine akustische Kopplung zu erzeugen und damit die Übertragung der genannten Nachweiswellen und Kontrollwellen durch die genannte Hauptfläche zu sichern, und dass dieser Träger (2) damit einen akustischen Wellenleiter für die direkte Übertragung der genannten Kontrollwellen auf einem sekundären akustischen Weg zwischen dem Sender (E) und dem Empfänger (R) bildet,
(b) dass der Sender (E) mit einem Erregerkreis (EC; EC2; EC8) verbunden ist, der mit einem Frequenzgenerator (1) versehen ist, wobei dieser so gestaltet ist, dass er zwei Erregerfrequenzen (Fa, Fr) abgibt, die es gestatten, den Sender (E) der genannten hohen Axialresonanzfrequenz (Fa) für die Übertragung der genannten Nachweiswellen mit hoher Frequenz auf dem genannten linearen akustischen Weg in der nachzuweisenden Flüssigkeit zu unterwerfen, und den Sender ausserdem der genannten niedrigen Radialresonanzfrequenz (Fr) für die Übertragung der genannten Kontrollwellen mit niedriger Frequenz auf dem genannten sekundären akustischen Weg im genannten Träger (2) zu unterwerfen, und
(c) dass der genannte Empfänger (E) mit einem Detektorkreis (DC1; DC2; DC8) verbunden ist, der mit mindestens einem Komparator (7; 87a, 87b) versehen und so ausgelegt ist, dass ein Nachweissignal (Sd) abgegeben wird, wenn die genannten Nachweiswellen auf dem genannten linearen akustischen Weg in der nachzuweisenden Flüssigkeit übertragen werden, und dass ausserdem ein Kontrollsignal (Sc) abgegeben wird, wenn die genannten Kontrollwellen auf dem genannten sekundären akustischen Weg im genannten Träger (2) übertragen werden, um die Funktionskontrolle des Detektors zu bewirken.

2. Detektor nach Anspruch 1, dadurch gekenzeichnet, dass der genannte Erregerkreis (EC; EC2; EC8) so ausgelegt ist, dass er dem genannten Empfänger (E) die genannten zwei Erregerfrequenzen nacheinander und zyklisch liefert und dass der genannte Detektorkreis (DC1; DC2; DC8) gleichfalls nacheinander und zyklisch die genannten Nachweis- bzw. Kontrollsignale (Sd bzw. SC) abgibt.

3. Detektor nach Anspruch 2, dadurch gekennzeichnet, dass der genannte Frequenzgenerator (1) mit dem Sender (E) über einen Schalter (4; 84) verbunden und so ausgelegt ist, dass er ausserdem ein Synchronisationssignal (Sy) abgibt, wobei der genannte Schalter von diesem Synchronisationssignal gesteuert wird, so dass die genannten zwei Erregerfrequenzen (Fa; Fr) abwechselnd an den Sender (E) abgegeben werden.

4. Detektor nach Anspruch 3, dadurch gekennzeichnet, dass der genannte Erregerkreis (EC8, Fig. 8) einen Schalter (84) mit drei Stellungen aufweist, der über eine logische Schaltung (80a) gesteuert wird, wobei diese das genannte Synchronisationssignal (Sy) vom genannten Frequenzgenerator (1) erhält und entsprechend gestaltet ist, um den genannten Schalter (84) so zu steuern, dass die genannten Axial- bzw. Radialresonanzfrequenzen (Fa bzw. Fr) abwechselnd dem genannten Sender (E) zugeleitet und durch dazwischenliegende Ruheintervalle getrennt werden.

5. Detecktor nach Anspruch 4, dadurch gekennzeichnet, dass der genannte Komparator (7) des Detektorkreises (DC2) eine einstrellbare Schwelle aufweist, mit dem genannten Empfänger (R) über einen Verstärker (5) und einen Gleichrichter (6) mit Tiefpassfilter verbunden und mit einem Regelwiderstand (8) versehen ist, der die Schwelle dieses Komparators (7) in Abhängigkeit der Amplitude eines vom genannten Gleichrichter (6) austretenden und der genannten radialen Erregerfrequenz (Fr) entsprechenden Signals (Sc6) einstellt.

6. Detektor nach Anspruch 4, dadurch gekennzeichnet, dass der genannte Detektorkreis (DC8, Fig. 8; Fig. 9) einen ersten Komparator (87a) umfasst, der eine dem genannten Kontrollsignal (Sc) zugeordnete, einstellbare Schwelle und einen ersten Regelwiderstand (88a) zum Einstellen der genannten ersten Schwelle aufweist und dass er ausserdem einen zweiten Komparator (87b) umfasst, der eine zweite, dem genannten Nachweissignal (Sd) zugeordnete einstellbare Schwelle sowie einen zweiten Regelwiderstand (88b) zum Einstellen der genannten zweiten Schwelle aufweist, wobei die genannten Komparatoren mit dem Empfänger (R) über einen Verstärker (5) sowie einen Gleichrichter (6) mit Tiefpassfilter verbunden sind und die, dem genannten Nachweissignal (Sd) zugeordnete zweite Schwelle in Abhängigkeit eines vom Gleichrichter (6) mit Tiefpassfilter austretenden Signals (Sc6) eingestellt wird, das der genannten Radialresonanzfrequenz enstpricht.

7. Verfahren zum Nachweis von flüssigen Medien mittels Ultraschallwellen, die von einem Wandler in Form eines piezoelektrischen Plättchens erzeugt werden, das auf einem festen Träger montiert ist, erzeugt werden, der einen linearen akustischen Weg im nachzuweisenden flüssigen Medium begrenzt, wobei man Nachweiswellen mit hoher Axialresonanzfrequenz und Kontrollwellen mit tiefer Radialresonanzfrequenz erzeugt, dadurch gekennzeichnet:
(a) dass man eine Hauptfläche des genannten piezoelektrischen Plättchens unmittelbar auf einer entsprechenden Auflagefläche des genannten Trägers befestigt, so dass eine gute mechanische und akustische Verbindung gebildet wird, welche die Übetragung der genannten Nachweiswellen senkrecht zur genannten Hauptfläche und der genannten Kontrollwellen in der Ebene dieser Hauptfläche des genannten Plättchens gestattet,
(b) dass man den genannten Wandler mit einem Frequenzgenerator verbindet, der ihm die genannten Axial- und Radialresonanzfrequenzen liefert, so dass die genannten Nachweis- bzw. Kontrollsignale übertragen werden,
(c) dass man die genannten Nachweis- und Kontrollwellen auffängt, die in der nachzuweisenden Flüssigkeit bzw. im genannten Träger übertragen werden, und dass man sie mit mindestens einer Schwelle vergleicht, um den Flüssigkeitsnachweis bzw. die Funktionskontrolle des genannten Wandlers zu bewerkstelligen.

8. Verfahren nach Anspruch 7, dadurch gekennzeichnet, dass man jede Abweichung der genannten Kontrollwellen in bezug auf eine erste vorbestimmte Kontrollschwelle ermittelt und dass man eine zweite Flüssigkeitsnachweisschwelle in Abhängigkeit der genannten Abweichung korrigiert.

## Claims

1. Ultrasonic detector for liquid media comprising an emitter (E) and a receiver (R) consisting of a transducer in the form of a piezoelectric plate mounted on a support (2) defining a linear acoustic path for the transmission of detection waves at a high axial resonance frequency in the liquid to be detected, this detector being adapted to control its operation by transmission of control waves at a low radial resonance frequency in said support (2), characterized in that:
(a) a main face of said piezoelectric plate forming the emitter (E) and the receiver (R) is fixed directly to a corresponding bearing surface (2e, 2r) of said support (2) so that a solid mechanical and acoustic connection is formed in order to establish an acoustic coupling to ensure the transmission of said detection and control waves by said main face and that this support (2) thus forms an acoustic waveguide for the direct transmission of said control waves on a secondary acoustic path between the emitter (E) and the receiver (R),
(b) the emitter (E) is connected to an excitation circuit (EC; EC2; EC8) provided with a frequency generator (1) which is adapted to deliver two excitation frequencies (Fa, Fr) enabling the emitter (E) to be subjected to said high axial resonance frequency (Fa) for the transmission of said detection waves at high axial resonance frequency on said linear acoustic path in the liquid to be detected and to further subject the emitter to said low radial resonance frequency (Fr) for the transmission of said control waves at low radial resonance frequency on said secondary acoustic path in said support (2) and
(c) said receiver (R) is connected to a detection circuit (DC1, DC2; DC8) which is provided with at least one comparator (7; 87a, 87b) and is adapted to deliver a detection signal (Sd) when said detection waves are transmitted on said linear acoustic path in the liquid to be detected and to further deliver a control signal (Sc) when said control waves are transmitted on said secondary acoustic path in said support (2) in order to thereby control the operation of the detector.

2. Detector according to claim 1, characterized in that said excitation circuit (EC; EC2; EC8) is adapted to successively and cyclically deliver said two excitation frequencies to said emitter (E) and that said detection circuit (DC1; DC2; DC8) also successively and cyclically delivers said detection (Sd) and control (Sc) signals.

3. Detector according to claim 2, characterized in that said frequency generator (1) is connected to the emitter (E) via a switch (4; 84) and is adapted to further deliver a synchronization signal (Sy), said switch being controlled by this synchronization signal so as to alternately deliver said two excitation frequencies (Fa, Fr) to said emitter (E).

4. Detector according to claim 3, characterized in that said excitation circuit (EC8, Fig. 8) comprises a switch (84) having three positions controlled via a logic circuit (80a) which receives said synchronization signal (Sy) from said frequency generator (1) and is adapted to control said switch (84) so that said axial (Fa) and radial (Fr) resonance frequencies are alternately delivered to said emitter (E) and are separated by intermediate rest intervals.

5. Detector according to claim 4, characterized in that said comparator (7) of the detection circuit (DC2) has an adjustable threshold, is connected to said receiver (R) via an amplifier (5) and a rectifier (6) with a low-pass filter and is provided with a variable resistance (8) for adjusting the threshold of this comparator (7) as a function of the amplitude of a signal (Sc6) coming from said rectifier (6) and corresponding to said radial excitation frequency (Fr).

6. Detector according to claim 4, characterized in that said detection circuit (DC8, Fig. 8; Fig. 9) comprises a first comparator (87a) having a first adjustable threshold associated with said control signal (Sc) and a first resistance (88a) for adjusting said first threshold and that it further comprises a second comparator (87b) having a second adjustable threshold associated with said detection signal (Sd) and a second resistance (88b) for adjusting said second threshold, said comparators being connected to said receiver (R) via an amplifier (5) and a rectifier (6) with a low-pass filter and said second threshold associated with said detection signal (Sd) being adjustable as a function of a signal (Sc6) coming from said rectifier (6) with a low-pass filter and corresponding to said radial resonance frequency (Fr).

7. Method of detecting liquid media by means of ultrasonic waves generated by a transducer in the form of a piezoelectric plate mounted on a solid support defining a linear acoustic path in the liquid medium to be detected, comprising generating detection waves at a high axial resonance frequency and control waves at a low radial resonance frequency , characterized by
(a) directly fixing a main face of said piezoelectric plate to a corresponding bearing surface of said support so as to make a good mechanical and acoustic connection enabling the transmission of said detection waves perpendicularly to said main face and of said control waves in the plane of this main face of said plate,
(b) connecting said transducer to a frequency generator which delivers thereto said axial and radial resonance frequencies so as to respectively transmit said detection and control waves,
(c) intercepting said detection and control waves transmitted respectively in the liquid to be detected and in said support and comparing them with at least one threshold in order to effect the detection of liquid and control of the operation of said transducer.

8. Process according to claim 7, characterized by determining any deviation of said control signals with respect to a predetermined first control threshold and correcting a second liquid-detection threshold as a function of said deviation.
